# EUROPÄISCHE PATENTANMELDUNG

(11) **EP 4 744 470 A1**
(43) Veröffentlichungstag der Anmeldung: **20.05.2026**
(21) Anmeldenummer: 25213202.2
(22) Anmeldetag: 04.11.2025
(51) Int. Cl.: A01C 5/02, A01C 7/02

(54) **HANDGERÄT FÜR DIE AUSSAAT**

(30) Priorität: 18.11.2024 DE 102024133660
(71) Anmelder: Dahlke, Thomas, 86447 Todtenweis (DE)
(72) Erfinder: Dahlke, Thomas, 86447 Todtenweis (DE)
(74) Vertreter: Charrier Rapp & Liebau

(57) **Zusammenfassung**

Die Erfindung betrifft Handgerät für die Aussaat zum Einbringen von Löchern in einen Boden, umfassend ein Gestell (1) mit mindestens zwei drehbar am Gestell angeordneten und in wählbaren Funktionsstellungen einrastbaren Trägern (2), wobei jeder Träger (2) mindestens zwei Reihen (3) mit mehreren in definierten Abständen zueinander angeordneten Erhebungen (4) aufweist. Die Erhebungen (4) dienen zum Einbringen der Löcher durch Aufdrücken des Handgerätes auf den Boden und unterscheiden sich in verschiedenen Reihen (3) im Abstand zueinander, so dass durch Auswahl der Funktionsstellungen der Träger (2) unterschiedliche Lochmuster erzeugt werden können.

## Beschreibung

Die Erfindung betrifft ein Handgerät zum Einbringen von Löchern in einen Boden oder in die Erde eines Hochbeetes zur Aussaat oder Bepflanzung.

Aus dem Stand der Technik sind handbetätigte Vorrichtungen bekannt, mit denen manuell Muster aus Löchern oder Bodenvertiefungen für das Aussäen oder Einpflanzen von Saatgut (Samen oder Setzlinge) durch das Aufdrücken der Vorrichtung auf den Boden erzeugt werden können. Die einfachste Variante einer entsprechenden Vorrichtung ist ein als Dibbelbrett bezeichnetes Brett, welches in einem Gitter angeordnete Erhebungen auf der Unterseite aufweist, die beim Aufdrücken des Brettes auf den Boden ein bestimmtes Lochmuster erzeugen. Unter Löcher werden Vertiefungen, wie z.B. Mulden, im Boden verstanden, die zum Einbringen von Saatgut oder von Setzlingen geeignet sind. Die Bezeichnungen Löcher und Vertiefungen werden dabei als Synonyme verstanden. Wenn von Saatlöchern gesprochen wird, sind damit Vertiefungen im Boden zum Einbringen von Saatgut und auch Pflanzlöcher gemeint, in die Setzlinge eingepflanzt werden können.

Aus der US 2,382,221 ist eine Aussaatvorrichtung mit einem Gitterrahmen bekannt, an dessen Ober- und Unterseite jeweils ein Gitter aus gleichmäßig beabstandeten Eindrückzapfen angeordnet ist, wobei sich die Abstände der Zapfen auf einer Oberseite und auf der dieser gegenüberliegenden Unterseite des Gitters unterscheiden. Durch das Eindrücken der Aussaatvorrichtung in den Boden können gleichmäßige Lochmuster mit zwei unterschiedlichen Lochabständen erzeugt werden. Die Abstände und Eindringtiefen sind dabei festgelegt und nicht anpassbar. Bei der bekannten Aussaatvorrichtung sind damit nur Sämlingskulturen mit zwei unterschiedlichen Lochabständen realisierbar, was die Einsatzmöglichkeiten stark beschränkt.

In anderen Anwendungsfällen ist es vorteilhaft, wenn die Abstände zwischen den Eindrückzapfen anpassbar sind sodass die Vorrichtung für die Erfordernisse verschiedener Sämlingskulturen umgebaut werden kann. Zum Anlegen von Mischkulturen ist es zudem erforderlich, die Abstände und Tiefen der erzeugten Löcher einzeln an die Wachstumsbedürfnisse der Sämlinge anzupassen. Dazu sind ebenfalls Lösungen aus dem Stand der Technik bekannt.

Aus der US 6,024,034 und der CN 206490984 U sind Aussaathilfen für Mischkulturen mit Eindrückelementen bekannt, die in Reihen angeordnet sind und deren Eindringtiefe anpassbar ist, wobei die Abstände der Eindrückelemente zueinander variiert werden kann. Die US 6,024,034 offenbart eine Vorrichtung bestehend aus einem aufsteckbaren Rahmen aus einer Vielzahl von Vierkantstäben, die beliebig miteinander verbunden werden können. Entlang von unteren Stangen sind dabei mehrere Eindrückelemente angebracht, die in gewünschten Abständen einzeln am Rahmen befestigt werden können. Die Abstände zwischen den Reihen und die Abstände zwischen den einzelnen Eindrückelementen innerhalb der Reihen sind dabei anpassbar. Die Eindringtiefe der Eindrückelemente ist einzeln verstellbar um Abdrücke mit unterschiedlichen Tiefen in der Bodenoberfläche erzeugen zu können.

Eine ähnliche Anordnung ist auch aus der CN 206490984 U bekannt, die eine Aussaatvorrichtung betrifft, die mehrere in einem Rahmen verschiebbare Reihen aufweist, welche jeweils eine Vielzahl von Eindrückelementen enthalten. Die Abstände zwischen den Reihen und die Abstände zwischen den einzelnen Eindrückelementen innerhalb der Reihen sowie die Eindringtiefe der Eindrückelemente sind anpassbar.

Bei den bekannten Aussaathilfen kann die Vorrichtung an verschiedene Sämlingskulturen und auch Mischkulturen angepasst werden. Um die Umgestaltung der Vorrichtung vorzunehmen müssen die Abstände zwischen den einzelnen Eindrückelementen verändert werden und ebenso die Eindringtiefe der einzelnen Eindrückelemente individuell angepasst werden. Dies ermöglicht zwar eine hohe Anzahl an erzeugbaren Lochmustern und eignet sich prinzipiell für jede Form der Mischkultur, jedoch ist das manuelle Einstellen unhandlich und zeitaufwändig. Zum Einstellen eines jeden Eindrückelementes ist bspw. das manuelle Lösen und Festziehen einer Schraube erforderlich, was die Vorrichtung stark beansprucht und die Bedienung der Vorrichtung erschwert. Ebenso muss wiederholt der Abstand und die Eindringtiefe jedes Eindrückelementes kontrolliert werden.

Vor diesem Hintergrund besteht die Aufgabe der Erfindung in der Bereitstellung eines Handgerätes zum Einbringen von Löchern in einen Boden oder in die Erde eines Hochbeetes zur Aussaat oder Bepflanzung, die eine einfache und schnelle Anpassung der Abstände zwischen den erzeugten Saatlöchern und der Lochgeometrie ermöglicht. Das Handgerät soll es zudem erlauben eine Vielzahl möglicher Lochmuster im Boden zu erzeugen und so den Boden auf einfache und reproduzierbare Weise für die Aussaat verschiedener Sämlingskulturen oder Mischkulturen vorzubereiten. Dabei soll die Aussaatfläche möglichst effizient genutzt werden um einen optimalen Ertrag zu erzielen. Die Umstellung von einem auf ein anderes Lochmuster soll dabei zügig und mit wenigen Handgriffen erfolgen, die einen geringen Kraftaufwand erfordern. Zudem sollte das Gestell bei der Anpassung des Lochmusters nicht zu stark beansprucht werden, um die Langlebigkeit des Gerätes zu gewährleisten.

Diese Aufgaben werden mit einem Handgerät mit den Merkmalen des Anspruchs 1 gelöst. Bevorzugte Ausführungsformen des Handgerätes gehen aus den abhängigen Ansprüchen hervor.

Das erfindungsgemäße Handgerät dient zum Einbringen von Löchern bzw. Vertiefungen in einen Boden oder in die Erde eines Hochbeetes zur exakten Aussaat von Saatgut in ein Saatbett. Das erfindungsgemäße Handgerät umfasst ein Gestell mit mindestens zwei drehbar am Gestell angeordneten und in wählbaren Funktionsstellungen einrastbaren Trägern, wobei jeder Träger mindestens zwei Reihen mit mehreren in definierten Abständen zueinander angeordneten Erhebungen aufweist. Die Erhebungen dienen dabei zum Einbringen der Löcher bzw. Vertiefungen in den Boden durch Aufdrücken des Handgerätes auf den Boden oder in die Erde des Hochbeetes. Die Erhebungen in verschiedenen Reihen unterscheiden sich im Abstand zueinander, sodass durch Auswahl der Funktionsstellungen der Träger unterschiedliche Lochmuster erzeugt werden können.

Die mindestens zwei Träger sind so am Gestell angeordnet, dass sie unabhängig voneinander um die eigene Achse gedreht werden können. Der Abstand zwischen den mindestens zwei Trägern beträgt vorzugsweise zwischen 60 mm und 120 mm. Die Träger können durch Drehung so ausgerichtet werden, dass genau eine der Reihen jedes Trägers beim Aufdrücken des Handgerätes Richtung Boden weist. Welche der unterschiedlich ausgestalteten Reihen jedes Trägers Richtung Boden weist kann damit unabhängig vom anderen Träger bzw. den weiteren Trägern ausgewählt werden, sodass durch das Aufdrücken des Handgerätes auf den Boden in einem Arbeitsschritt Reihen von Saatlöchern erzeugt werden können, wobei die Abstände zwischen den Saatlöchern innerhalb einer Reihe konstant sind, aber sich von den Abständen in der anderen Reihe oder den anderen Reihen unterscheiden. Die Abstände zwischen den Erhebungen innerhalb einer Reihe sind konstant und betragen vorzugsweise zwischen 20 mm und 100 mm.

Die drehbar gelagerten Träger sind in verschiedenen Funktionsstellungen einrastbar. Gemäß einer beispielhaften Ausführungsform können die Träger jeweils in mindestens zwei, bevorzugt in vier Funktionsstellungen am Gestell eingerastet werden. Dabei entsprechen die Funktionsstellungen den Winkelpositionen, die beim Drehen der Träger um die eigene Achse (Längsachse der Träger) dann erreicht werden, wenn eine der Reihen mit Erhebungen in eine während der Anwendung zum Boden weisende Stellung gebracht wird. Durch das Einrasten der Funktionsstellung wird ein Drehen der Träger während der Anwendung verhindert, sodass die Winkelposition der Träger beim Aufdrücken des Gestells auf den Boden beibehalten wird.

Das Handgerät erzeugt Saatlöcher in definiertem Abstand zur Aufnahme von unterschiedlichem Saatgut, wobei die Beschaffenheit der erzeugten Saatlöcher durch die verschiedenen Funktionsstellungen der Träger auf die unterschiedlichen Erfordernisse des Saatgutes angepasst werden kann, sodass verschiedene Sämlingskulturen oder Mischkulturen mit optimalen Wachstumsbedingungen angesetzt werden können.

Die Aussaat verschiedener Samen, insbesondere beim Anlegen von Mischkulturen, erfordert für optimale Wachstumsbedingungen das Anpassen der Beschaffenheit der Saatlöcher an die Bedürfnisse des Saatgutes. Dabei spielt neben dem Abstand zwischen den Saatlöchern die Geometrie der Saatlöcher eine wichtige Rolle, die in der vorliegenden Erfindung durch die Geometrie der Erhebungen vorgegeben wird und auswählbar ist.

In einer erfindungsgemäßen Ausführungsform sind die Erhebungen vorzugsweise stab- oder zylinderförmig, können jedoch auch kegelstumpf- oder kegelförmig ausgebildet sein. Für das Anlegen von Mischkulturen ist es zudem zweckmäßig, wenn sich die Formen und/oder Abmessungen in den verschiedenen Reihen der jeweiligen Träger unterscheiden.

Welche der unterschiedlich ausgestalteten Reihen jedes Trägers Richtung Boden weist kann unabhängig vom anderen Träger durch die Einstellung der entsprechenden Funktionsstellung des Trägers ausgewählt werden. Wenn sich die Träger beim Aufdrücken des Handgerätes auf den Boden in unterschiedlichen Funktionsstellungen befinden, können somit in einem einzigen Arbeitsschritt Reihen von Saatlöchern erzeugt werden, wobei sich die Formen und/oder Abmessungen der Saatlöcher in den verschiedenen Reihen unterscheiden.

In einer vorteilhaften Ausführungsform unterscheiden sich die Erhebungen in verschiedenen Reihen in ihrer Höhe. Die Höhe der Erhebungen bestimmt die Tiefe der Saatlöcher, die beim Aufdrücken des Gestells auf den Boden entstehen. Saatlöcher mit unterschiedlicher Tiefe werden beispielsweise für die Aussaat von Lichtkeimern oder Dunkelkeimern benötigt. Lichtkeimer benötigen in der Regel eine Saattiefe von weniger als 5 mm, während Dunkelkeimer in der Regel von einer Saattiefe von mehr als 5 mm profitieren. Zur Erzeugung von Saatlöchern, die optimale Wachstumsbedingungen ermöglichen weisen die Erhebungen bevorzugt Höhen zwischen 5 mm und 40 mm, insbesondere zwischen 20 mm und 30 mm auf.

Die Erhebungen sind für eine hohe Verschleißbeständigkeit vorzugsweise aus Metall, insbesondere Edelstahl oder Aluminium gebildet, können aber aus wirtschaftlichen Gründen auch aus Kunststoff oder Holz gefertigt sein.

Gemäß einer beispielhaften Ausführungsform der Erfindung weisen die drehbar am Gestell angeordneten Träger eine längliche oder stabförmige, insbesondere eine zylinder- oder quaderförmige äußere Grundstruktur auf und können hohl oder massiv ausgestaltet sein. Die Träger weisen im Querschnitt bevorzugt eine maximale Ausdehnung zwischen 20 und 60 mm auf. Die Drehung der Träger zum Einstellen verschiedener Funktionsstellungen erfolgt bevorzugt um eine Längsachse der Träger. Die Reihen mit den am Träger angeordneten Erhebungen verlaufen vorzugsweise parallel zur Längsachse des Trägers.

Gemäß einer erfindungsgemäßen Ausführungsform weisen die Träger eine Länge zwischen 200 mm und 400 mm auf. Ein Handgerät, dessen Träger Längen im Bereich von 200 mm bis 400 mm aufweist, zeichnet sich durch eine leichte Handhabung aus, ermöglicht aber dennoch die Vorbereitung größerer, gartenüblicher Bodenflächen für die Aussaat.

Eine weitere vorteilhafte Ausführungsform sieht vor, dass mindestens ein Träger oder jeder Träger eine Reihe zur Erzeugung von Saatrillen aufweist, die eine entlang der Länge des jeweiligen Trägers verlaufende Klinge aufweist. Die Klinge erzeugt beim Aufdrücken des Gestells auf den Boden eine durchgängige Saatrille, die sich für Pflanzen eignet, deren Samen in Reihen ausgesät werden müssen. Die Klinge ist vorzugsweise aus Metall, Kunststoff oder Holz gefertigt.

Um eine hohe Verschleißbeständigkeit, insbesondere eine hohe Wetterbeständigkeit zu gewährleisten, sind die Träger vorzugsweise aus beschichtetem oder unbeschichtetem Metall, insbesondere Edelstahl oder Aluminium gebildet. Aus ökonomischen oder ökologischen Gesichtspunkten bietet sich auch die Fertigung aus Kunststoff oder Holz an. Ein Träger und die darauf angeordneten Erhebungen können aus einem Teil oder aus mehreren Teilen gefertigt sein, die miteinander verbunden wurden. Im letzteren Fall erfolgt die Befestigung der Erhebungen am Träger vorzugsweise über eine Steck-, Schraub-, oder Klebeverbindung.

Die Träger des Handgerätes sind in verschiedenen Funktionsstellungen am Gestell einrastbar. Das Einrasten der Träger in einer der Funktionsstellungen erfolgt gemäß einer bevorzugten Ausführungsform durch ein federbeaufschlagtes Klick- oder Rastsystem, das vorzugweise innerhalb des Rahmens angeordnet ist. Das Klick- oder Rastsystem umfasst vorzugsweise einen an mindestens einer Stirnseite jedes Trägers angeordneten, zylinderförmigen Lagerzapfen, der mindestens ein radial bewegliches, federbeaufschlagtes Eingriffselement aufweist. Für eine gleichmäßige Druckverteilung weist der Lagerzapfen bevorzugt zwei diametral gegenüberliegende, radial bewegliche und federbeaufschlagte Eingriffselemente auf. Die Eingriffselemente sind vorzugsweise kugelförmig. Ferner umfasst das Klick- oder Rastsystem eine im Rahmen angeordnete Lagerbohrung mit einer an die Kontur des Lagerzapfens angepassten Lagerkontur. Die Lagerkontur weist mehrere Eingriffskonturen auf, in die das mindestens eine Eingriffselement in den verschiedenen Funktionsstellungen einrasten kann. Die Anzahl der Eingriffskonturen entspricht dabei der Anzahl der wählbaren Funktionsstellungen am jeweiligen Träger.

Beim Umstellen von einer Funktionsstellung in eine andere durch Drehen des Trägers um seine Längsachse, wird das mindestens eine Eingriffselement zunächst durch Überwinden der Federkraft radial nach innen in den Lagerzapfen hineingedrückt, sodass die zum Lagerzapfen radial außen liegende Oberfläche des Eingriffselementes an der Lagerkontur entlanggleitet. Beim Erreichen der nächsten Eingriffskontur rastet das Eingriffselement aufgrund der Vorspannung des Eingriffselements durch eine Feder in die Eingriffskontur ein und fixiert damit die entsprechende Funktionsstellung.

Für eine besonders gute Handhabung weist das Handgerät in einer vorteilhaften Ausführungsform mindestens einen Handgriff auf, der beim Aufdrücken des Handgerätes auf den Boden vorzugsweise oberhalb der Träger am Gestell angeordnet ist. In einer zweckmäßigen Ausführungsform mit zwei Handgriffen sind die Handgriffe auf der Höhe der Träger oder oberhalb der Träger seitlich am Gestell angeordnet. Der mindestens eine Handgriff kann aus beschichtetem oder unbeschichtetem Metall, Kunststoff, Schaumstoff, Gummi oder aus natürlichen Materialien wie Holz oder Kork gefertigt sein. Der mindestens eine Handgriff verbessert den Komfort bei der Anwendung und ermöglicht eine gleichmäßige Druckverteilung beim Aufdrücken des Handgerätes auf den Boden. Zudem verhindert ein Handgriff ein zu leichtes Abrutschen der Hände. Um einen sicheren Halt mit einer Hand zu gewährleisten, kann der oder jeder Handgriff anatomisch geformt sein.

Eine weitere vorteilhafte Ausführungsform der Erfindung ist dadurch gekennzeichnet, dass das Gestell einen rechteckigen, insbesondere einen quadratischen Rahmen ausbildet. In einer weiteren vorteilhaften Ausführungsform umfasst das Gestell vier Seitenwände, wobei die in den Funktionsstellungen einrastbaren Träger drehbar an zwei gegenüberliegenden Seitenwänden angelenkt sind.

Für eine hohe Verschleißbeständigkeit, insbesondere eine hohe Wetterbeständigkeit, ist eine Fertigung des Rahmens und der Seitenwände aus beschichtetem oder unbeschichtetem Metall, insbesondere Edelstahl oder Aluminium zu bevorzugen. Ebenso können der Rahmen und die Seitenwände aus Kunststoff oder Holz gefertigt sein.

Diese und weitere Vorteile sowie bevorzugte Merkmale der Erfindung ergeben sich aus dem nachfolgend unter Bezugnahme auf die Zeichnungen beschriebenen Ausführungsbeispiel. Dabei zeigen
- **Fig. 1:**: 3D-Ansicht eines Handgerätes mit einem rechteckigen Rahmen, einem daran befestigten Handgriff und drei quaderförmigen Trägern, die jeweils drehbar am Rahmen angeordnet sind und drei Reihen aus kegelförmigen Erhebungen in unterschiedlichen Abständen sowie eine Klinge aufweisen, wobei in der dargestellten Ansicht eine Funktionsstellung mit zum Boden weisender Klinge gezeigt ist;
- **Fig. 2:**: Darstellung des Handgerätes von Figur 1 in einer Seitenansicht mit Blickrichtung senkrecht zur Längsachse der Träger in einer Funktionsstellung mit zum Boden weisender Klinge;
- **Fig. 3:**: Darstellung des Handgerätes von Figur 1 in einer Ansicht von oben, wobei in der dargestellten Ansicht eine Funktionsstellung mit zum Boden weisender Klinge gezeigt ist;
- **Fig. 4:**: Darstellung des Handgerätes von Figur 1 in einer Seitenansicht mit Blickrichtung parallel zur Längsachse der Träger, wobei in der dargestellten Ansicht eine Funktionsstellung mit zum Boden weisender Klinge gezeigt ist;
- **Fig. 5:**: Darstellung eines Querschnittes des Handgerätes von Figur 1 in der Schnittebene A-A;
- **Fig. 6:**: Darstellung eines Querschnittes des Handgerätes von Figur 1 in der Schnittebene B-B;

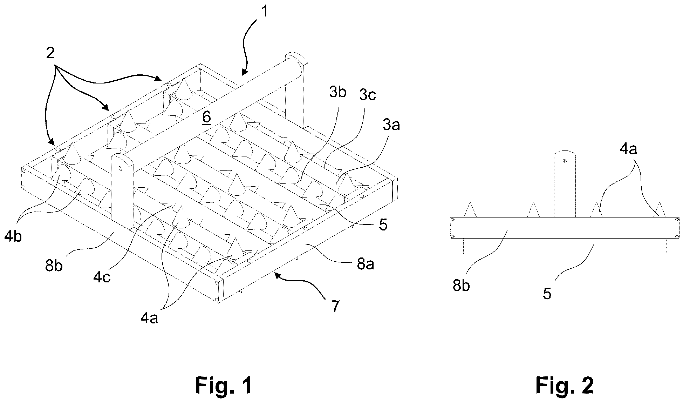

Die in Figur 1 dargestellte Ausführungsform eines erfindungsgemäßen Handgerätes zum Einbringen von Löchern in einen Boden zur Aussaat oder Bepflanzung umfasst ein Gestell 1 mit einem rechteckigen Rahmen 7, einem an dem Rahmen 7 angeordneten Handgriff 6 und drei drehbar am Gestell 1 angeordneten und in wählbaren Funktionsstellungen einrastbaren quaderförmigen Trägern 2. Die länglich ausgebildeten Träger 2 weisen einen rechteckigen Querschnitt auf, können jedoch auch eine andere Querschnittsform aufweisen, bspw. rund, oval, dreieckig oder allgemein polygonförmig.

Der rechteckige Rahmen 7 des Gestells 1 weist zwei gegenüberliegende Seitenwände 8a und zwei gegenüberliegende Seitenwände 8b auf, wobei die Träger 2 innerhalb des Rahmens 7 liegen und drehbar an den Seitenwänden 8a angelenkt sind. Die Längsachsen der quaderförmigen Träger 2 verlaufen parallel zu den sich gegenüberliegenden Seitenwänden 8b.

Jeder Träger 2 weist eine Klinge 5 und drei Reihen 3a, 3b, 3c mit jeweils mehreren kegelförmigen Erhebungen 4a, 4b, 4c auf. Die Reihen 3a, 3b, 3c und die Klinge 5 verlaufen parallel zu einer Längsachse des jeweiligen Trägers 2 an jeweils einer der vier Längsseiten des quaderförmigen Trägers 2. Die Anzahl der Reihen 3 kann dabei auch anders gewählt werden als in dem zeichnerisch dargestellten Ausführungsbeispiel. So können bspw. statt den drei Reihen 3a, 3b, 3c und der Klinge 5 auch vier Reihen 3 mit Erhebungen 4 vorgesehen sein, wobei die Erhebungen 4 in jeder der Reihen 3 einen unterschiedlichen Abstand zueinander aufweisen. Zweckmäßig ist die Querschnittsform der Träger 2 an die Anzahl der Reihen angepasst. So können bspw. im Querschnitt pentagonförmige Träger 2 für fünf Reihen 3 vorgesehen sein, wobei an jeder Seite des Pentagons jeweils eine Reihe 3 mit Erhebungen 4 oder eine Klinge 5 angeordnet ist.

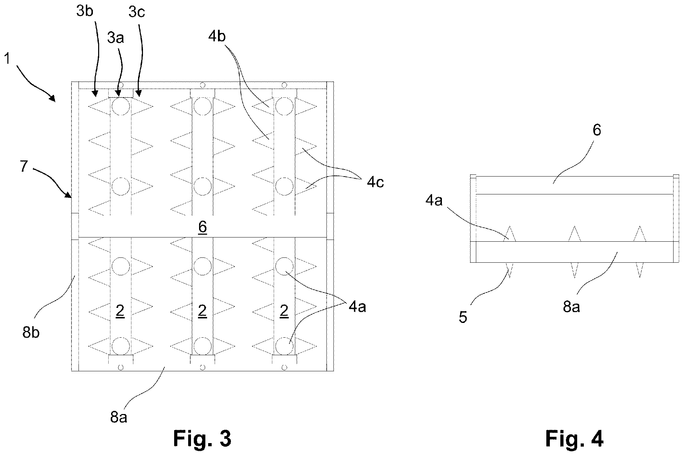

Die im gezeigten Ausführungsbeispiel kegelförmigen Erhebungen 4a, 4b, 4c sind in den jeweiligen Reihen 3a, 3b, 3c in definierten Abständen zueinander angeordnet und sind jeweils gleichmäßig über die gesamte Länge des Trägers 2 verteilt. Die Reihen 3a aller Träger 2 enthalten in der gezeigten Ausführungsform jeweils vier gleichmäßig beabstandete Erhebungen 4a und weisen in der in Figur 1 dargestellten Ansicht nach oben. Die Reihen 3b enthalten jeweils acht gleichmäßig beabstandete Erhebungen 4b und sind damit in einem engeren Abstand zueinander angebracht als die Erhebungen 4a in den Reihen 3a. Figur 3 zeigt die in Figur 1 dargestellte Ausführungsform in einer Draufsicht mit identischen Funktionsstellungen der Träger 2 und veranschaulicht zusätzlich die Reihen 3c, die jeweils sieben gleichmäßig beabstandete Erhebungen 4c enthalten und damit einen Abstand aufweisen der zwischen den Abständen der Erhebungen 4a und 4b liegt. Die Erhebungen 4b und 4c weisen in den dargestellten Ansichten zu den zwei diametral gegenüberstehenden Seitenwänden 8b.

Figur 2 und Figur 4 stellen die Ausführungsform aus Figur 1 und Figur 3 jeweils in einer Seitenansicht mit zum Boden weisenden Klingen 5 dar. Dabei zeigt Figur 2 eine Seitenansicht mit Blickrichtung senkrecht zur Längsachse der Träger und Figur 4 eine Seitenansicht mit Blickrichtung parallel zur Längsachse der Träger.

In dem gezeigten Ausführungsbeispiel des erfindungsgemäßen Handgerätes sind die Träger 2 drehbar am Gestell gelagert und in wählbaren Funktionsstellungen einrastbar. Die in den Figuren 1 bis 4 dargestellte Ausführungsform des Handgerätes beinhaltet dabei beispielhaft drei quaderförmige Träger 2, die jeweils in vier Funktionsstellungen einrastbar sind. Die Anzahl der Funktionsstellungen entspricht dabei der Anzahl der Reihen i jedem Träger, die mit Funktionselementen bestückt sind. In dem zeichnerisch dargestellten Ausführungsbeispiel sind dies die drei Reihen 3a, 3b und 3c sowie die Klinge 5, die in einer vierten Reihe an jedem Träger 2 angeordnet ist. Die einzelnen Funktionsstellungen ergeben sich dabei aus den Winkelpositionen, die beim Drehen der Träger 2 um die Längsachse eingestellt werden können, wenn die Klinge 5 oder eine der drei Reihen 3a, 3b oder 3c eines Trägers 2 in eine während der Anwendung zum Boden weisende Stellung gebracht wird. Die Funktionsstellung jedes Trägers 2 der gezeigten Ausführungsform kann demzufolge unabhängig von der Funktionsstellung der anderen Träger 2 so verändert werden, dass entweder die Klinge 5 oder eine der drei Reihen 3a, 3b, 3c mit den Erhebungen 4a, 4b, 4c zum Boden weist.

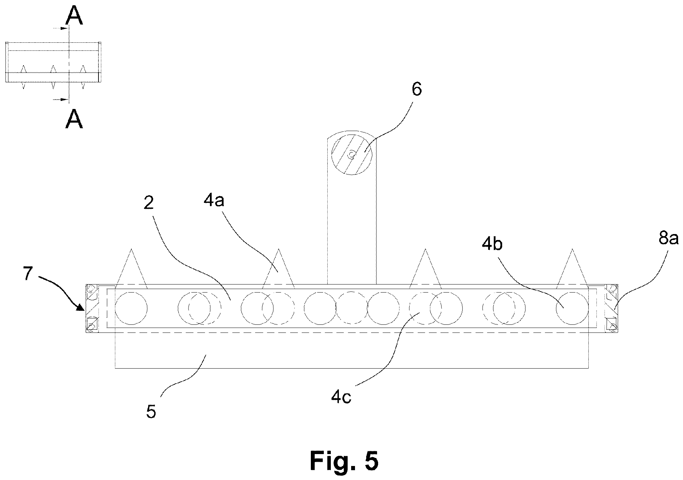

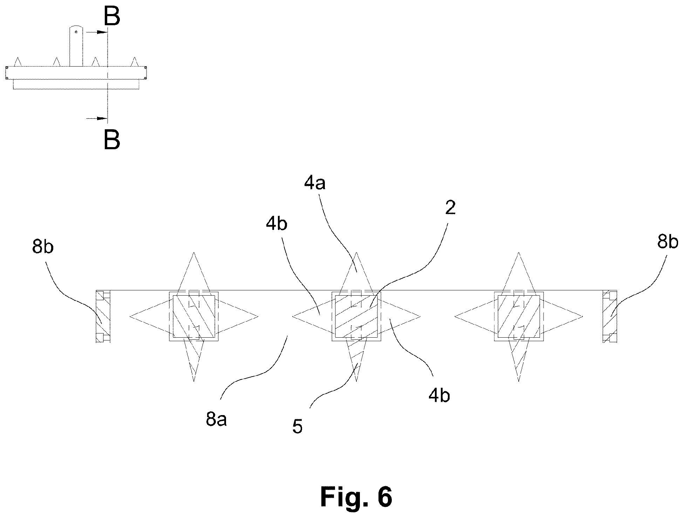

Figur 5 und Figur 6 zeigen jeweils einen Querschnitt der Ausführungsform des Handgerätes von Figur 1 entlang einer Schnittebene A-A (Figur 5) bzw. B-B (Figur 6). Die Schnittebene in der Darstellung in Figur 5 verläuft parallel zur Längsachse der Träger 2 zwischen zwei Trägern 2 durch den Handgriff 6 und durch den Rahmen 7. Die Darstellung veranschaulicht die Anordnung der Erhebungen 4a, 4b, 4c und der Klinge 5 entlang der Längsachse eines Trägers 2. Der in Figur 6 dargestellte Querschnitt verläuft entlang einer zur Längsachse der Träger 2 senkrechten Schnittebene und veranschaulicht die Anordnung der Erhebungen 4a, 4b, 4c und der Klinge 5 entlang des Umfangs eines Trägers 2.

Die Erhebungen 4a, 4b, 4c und die Klinge 5 dienen jeweils zum Einbringen von Vertiefungen in einen Boden zur Aussaat. Soll ein Boden für die Aussaat einer Sämlingskultur oder einer Mischkultur vorbereitet werden, werden zunächst die Träger 2 in eine gewünschte Funktionsstellung gebracht. Dabei kann für eine Monokultur an jedem Träger 2 die gleiche Funktionsstellung gewählt werden, oder, wenn beispielsweise eine Mischkultur angelegt werden soll, unterschiedliche Funktionsstellungen der Träger 2 gewählt werden. Ebenso eignet sich das Handgerät zur Erzeugung mehrerer Saatrillen in definiertem Abstand zueinander die sich für Pflanzen eignen, deren Samen in Reihen ausgesät werden müssen. Zur Erzeugung von Saatrillen können die Klingen 5 an den Trägern verwendet werden, indem das Handgerät in die in Figur 1 gezeigte Funktionsstellung gebracht wird, in der alle Klingen 5 an den Trägern 2 zum Boden hinweisen. In entsprechender Weise können perforationsartig Vertiefungen bzw. Saat- oder Pflanzlöcher in vorgegebenen Abständen in den Boden eingebracht werden, indem das Handgerät in eine Funktionsstellung gebracht wird, bei der jeweils eine Reihe 3a, 3b, 3c der Träger 2 mit den jeder Reihe zugeordneten Erhebungen 4a, 4b, 4c zum Boden hinweist.

Durch das Aufdrücken des Handgerätes auf den Boden werden nach dem Einstellen der Funktionsstellungen Pflanzlöcher bzw. Saatlöcher oder Saatrillen erzeugt. Da sich die Abstände zwischen den Erhebungen 4a, 4b, 4c in den verschiedenen Reihen 3a, 3b, 3c unterscheiden, kann durch eine unterschiedliche Kombination der Funktionsstellungen der Träger 2 eine Vielzahl unterschiedlicher Vertiefungsmuster erzeugt werden.

In der in den Figuren 1 bis 6 dargestellten Ausführungsform weisen die Erhebungen 4a, 4b und 4c jeweils die gleiche kegelförmige Geometrie auf. Die Ausgestaltung der Erhebungen 4 in anderen Ausführungsformen kann sich von der dargestellten Ausführungsform in den Abständen zueinander, in der Geometrie der Erhebungen 4 und in deren Höhe unterscheiden. So können die Erhebungen in unterschiedlichen Reihen 3 beispielsweise stab-, zylinder- oder kegelstumpfförmig und mit unterschiedlichen Höhen ausgeführt sein und unterschiedliche Abstände zueinander aufweisen. Ausführungsformen mit unterschiedlichen Höhen und Abständen der Erhebungen 4 zueinander in unterschiedlichen Reihen 3 sind besonders für das Anlegen von Mischkulturen zweckmäßig.

Bei der manuellen Einstellung der Winkelposition des jeweiligen Trägers 2 durch Drehen des Trägers 2 am Gestell 1, sodass eine der Reihen 3a, 3b oder 3c oder die Klinge 5 nach unten weist, rastet der Träger bevorzugt in der gewählten Funktionsstellung ein. Das Einrasten der Träger 2 in einer der Funktionsstellungen erfolgt zweckmäßig über ein federbeaufschlagtes Klicksystem. Die Arretierung ist dabei gerade so stark, dass ein Verdrehen der Träger 2 während der Anwendung verhindert wird, ein manuelles Drehen der Träger 2 nach der Anwendung jedoch keinen großen Kraftaufwand erfordert. So wird die Winkelposition der Träger 2 beim Aufdrücken des Gestells auf den Boden beibehalten und es ist keine Arretierung zum Einrasten der Träger 2 notwendig, die einen zusätzlichen Handgriff seitens des Benutzers verlangt. Anstelle des federbeaufschlagten Klicksystems können auch andere Mechanismen zur Festlegung der Träger 2 in ihren jeweiligen Funktionsstellungen eingesetzt werden. So können bspw. auch Klemmmechanismen oder Rastmechanismen vorgesehen sei, bspw. ein Rastmechanismus mit Stiften, welche die Träger 2 am Gestell 1 in ihren jeweiligen Funktionsstellungen fixieren.

Die Erfindung stellt damit ein Handgerät zum Einbringen von Löchern bzw. Vertiefungen in einen Boden zur Aussaat oder Bepflanzung bereit, die eine einfache und schnelle Anpassung der Abstände zwischen den erzeugten Löchern bzw. Vertiefungen und deren Geometrie ermöglicht. Das Handgerät erlaubt es dem Benutzer schnell und unkompliziert eine Vielzahl möglicher Vertiefungsmuster im Boden zu erzeugen und so den Boden auf einfache und reproduzierbare Weise für die Aussaat verschiedener Sämlingskulturen und Mischkulturen vorzubereiten.

Die Beschaffenheit der erzeugten Pflanz- oder Saatlöcher kann durch die Auswahl der entsprechenden Funktionsstellungen der Träger am Gestell einfach auf die unterschiedlichen Erfordernisse des Saatgutes angepasst werden. So können optimale Wachstumsbedingungen für verschiedene Sämlingskulturen oder Mischkulturen geschaffen werden.

Die Umstellung von einem auf ein anderes Vertiefungsmuster erfolgt komfortabel und zügig mit wenigen Handgriffen, die einen geringen Kraftaufwand erfordern. Dabei wird das Gestell nicht zu stark beansprucht, was die Langlebigkeit des Handgerätes gewährleistet.

### Bezugszeichenliste

- 1: Gestell
- 2: Träger
- 3a: Erste Reihe
- 3b: Zweite Reihe
- 3c: Dritte Reihe
- 4a: Erste Erhebungen
- 4b: Zweite Erhebungen
- 4c: Dritte Erhebungen
- 5: Klinge
- 6: Handgriff
- 7: Rahmen
- 8a: Erste Seitenwände
- 8b: Zweite Seitenwände

## Patentansprüche

1. Handgerät zum Einbringen von Löchern in einen Boden zur Aussaat oder Bepflanzung, umfassend ein Gestell (1) mit mindestens zwei drehbar am Gestell angeordneten und in wählbaren Funktionsstellungen einrastbaren Trägern (2), wobei jeder Träger (2) mindestens zwei Reihen (3) mit mehreren in definierten Abständen zueinander angeordneten Erhebungen (4) aufweist, wobei die Erhebungen (4) zum Einbringen der Löcher durch Aufdrücken des Handgerätes auf den Boden dienen und wobei sich die Erhebungen (4) in verschiedenen Reihen (3) im Abstand zueinander unterscheiden, so dass durch Auswahl der Funktionsstellungen der Träger (2) unterschiedliche Lochmuster erzeugt werden können.

2. Handgerät nach Anspruch 1, **dadurch gekennzeichnet, dass** die Erhebungen (4) stabförmig, zylinder-, kegelstumpf- oder kegelförmig ausgebildet sind.

3. Handgerät nach Anspruch 1 oder 2, **dadurch gekennzeichnet, dass** die Erhebungen (4) in unterschiedlichen Reihen jeweils unterschiedliche Formen und/oder unterschiedliche Abmessungen aufweisen.

4. Handgerät nach einem der voranstehenden Ansprüche, **dadurch gekennzeichnet, dass** sich die Erhebungen (4) in verschiedenen Reihen (3) in ihrer Höhe unterscheiden.

5. Handgerät nach einem der voranstehenden Ansprüche, **dadurch gekennzeichnet, dass** die Erhebungen (4) Höhen zwischen 20 mm und 40 mm, bevorzugt zwischen 25 mm und 30 mm aufweisen.

6. Handgerät nach einem der voranstehenden Ansprüche, **dadurch gekennzeichnet, dass** die Träger (2) eine längliche oder stabförmige, insbesondere eine zylinder- oder quaderförmige Grundstruktur aufweisen.

7. Handgerät nach einem der voranstehenden Ansprüche, **dadurch gekennzeichnet, dass** die Träger (2) eine Länge zwischen 200 mm und 400 mm aufweisen.

8. Handgerät nach einem der voranstehenden Ansprüche, **dadurch gekennzeichnet, dass** mindestens ein Träger (2) oder jeder Träger (2) eine Reihe (3) zur Erzeugung von Saatrillen aufweist, die eine entlang der Länge des jeweiligen Trägers verlaufende Klinge (5) aufweist.

9. Handgerät nach einem der voranstehenden Ansprüche, **dadurch gekennzeichnet, dass** in den jeweiligen Funktionsstellungen der Träger (2) genau eine Reihe (3) jedes Trägers (2) so ausgerichtet ist, dass die in dieser Reihe (3) angeordneten Erhebungen (4) beim Aufdrücken des Handgerätes auf den Boden zum Boden weisen.

10. Handgerät nach einem der voranstehenden Ansprüche, **dadurch gekennzeichnet, dass** die Träger (2) jeweils in mindestens zwei, bevorzugt in vier Funktionsstellungen am Gestell eingerastet werden können.

11. Handgerät nach einem der voranstehenden Ansprüche, **dadurch gekennzeichnet, dass** das Einrasten der Träger (2) in einer der Funktionsstellungen durch ein federbeaufschlagtes Klicksystem erfolgt.

12. Handgerät nach einem der voranstehenden Ansprüche, **dadurch gekennzeichnet, dass** das Gestell (1) mindestens einen Handgriff (6) aufweist.

13. Handgerät nach einem der voranstehenden Ansprüche, **dadurch gekennzeichnet, dass** das Gestell (1) einen rechteckigen, insbesondere einen quadratischen Rahmen (7) ausbildet.

14. Handgerät nach einem der voranstehenden Ansprüche, **dadurch gekennzeichnet, dass** das Gestell (1) vier Seitenwände (8) umfasst, wobei die in den Funktionsstellungen einrastbaren Träger drehbar an zwei gegenüberliegenden Seitenwänden (8a) angelenkt sind.
